# FASCICULE DE BREVET EUROPEEN

(11) **EP 0 545 800 B1**
(45) Date de publication et mention de la délivrance du brevet: **03.07.1996**
(21) Numéro de dépôt: 92403225.3
(22) Date de dépôt: 30.11.1992
(51) Int. Cl.: F22B 1/02

(54) **Dispositif de piègeage de corps migrants à l'intérieur du circuit secondaire d'un générateur de vapeur**
Fremdpartikelfilter im Sekundärkreislauf eines Dampferzeugers
Trapping device for foreign objects in a secondary loop of a steam generator

(30) Priorité: 02.12.1991 FR 9114900
(43) Date de publication de la demande: 09.06.1993
(73) Titulaire: FRAMATOME, 92084 Paris-la-Défense (FR)
(72) Inventeur: Poussin, Christophe, F-92400 Courbevoie (FR); Ayme, Henri, F-92150 Suresnes (FR)
(74) Mandataire: Dubois-Chabert, Guy

(56) Documents cités:
- EP-A- 0 183 049
- GB-A- 1 126 306
- US-A- 3 916 844

## Description

### DOMAINE DE L'INVENTION

L'invention concerne les générateurs de vapeur utilisés dans les installations nucléaires de production d'énergie électrique, notamment celles utilisant un ou plusieurs réacteurs à eau pressurisée. L'invention concerne en particulier un dispositif placé dans le circuit secondaire de ce générateur de vapeur.

### ART ANTERIEUR ET PROBLEME POSE

Dans une centrale nucléaire de production d'électricité, dans laquelle le dispositif fournissant de l'énergie est un réacteur nucléaire à eau pressurisée, un circuit primaire sert à l'évacuation de l'énergie produite par le réacteur. De l'eau sous pression est enfermée dans ce circuit primaire. On utilise un échangeur de chaleur, tel qu'un générateur de vapeur, pour exploiter l'énergie thermique extraite du réacteur nucléaire par ce circuit primaire.

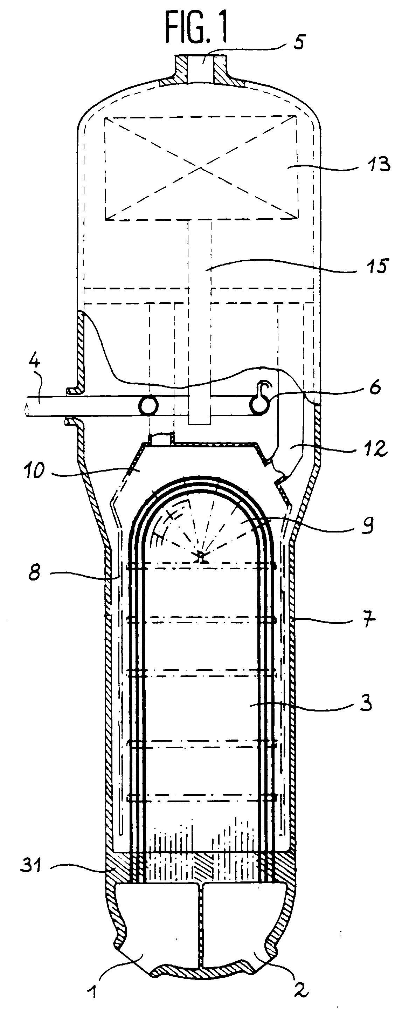

Un tel générateur de vapeur est représenté à la figure 1. L'entrée du circuit primaire est référencé 1 et la sortie de celui-ci est référencée 2. Ces deux orifices se trouvent à l'extrémité inférieure du générateur de vapeur. L'eau pressurisée circulant dans le circuit primaire traverse à l'intérieur du générateur de vapeur un faisceau de tube 3, dit faisceau tubulaire. Ce dernier est placé dans la partie inférieure du générateur de vapeur.

L'entrée de l'eau du circuit secondaire 4 est latérale et placée dans la partie supérieure. La sortie 5 de ce circuit secondaire se trouve dans la partie supérieure du générateur de vapeur. Après avoir pénétré par l'entrée du circuit secondaire 4, l'eau de ce dernier est distribuée par un anneau d'alimentation 6 et est canalisée entre l'enveloppe de pression 7 du générateur de vapeur et l'enveloppe 8 du faisceau 3. Elle remonte ensuite le long du faisceau tubulaire 3, au contact duquel elle est vaporisée. Arrivée à l'extrémité supérieure 9 de celui-ci, elle est collectée par la partie supérieure 10 de l'enveloppe de faisceau 7 et par des conduites d'évacuation 12 équipés de séparateurs centrifuges chargés de séparer l'eau de la vapeur. La vapeur est ensuite évacuée par la sortie 5 après avoir traversé un ou plusieurs sécheurs 13 achevant de séparer l'eau de la vapeur.

L'eau à saturation ainsi séparée de la vapeur et appelée eau recirculée, est canalisée, via la (ou les) conduite(s) 15, avant d'être mélangée à l'eau provenant de l'anneau d'alimentation 6.

Compte tenu de la structure de la partie du circuit secondaire traversant ce générateur de vapeur, on comprend facilement que des objets de dimensions relativement réduites, enfermés dans le circuit secondaire, sont susceptibles de suivre le parcours de ce dernier à l'intérieur du générateur de vapeur et ainsi de se coincer dans les passages étroits. Ceux-ci sont constitués notamment par les espaces séparant les tubes du faisceau tubulaire 3.

Des objets étrangers au générateur de vapeur de tailles, de formes et de natures diverses et appelés corps migrants, peuvent être accidentellement introduits dans le générateur de vapeur via le système d'alimentation d'eau secondaire, ou au cours des opérations de maintenance. Lors du fonctionnement du générateur de vapeur, ces corps peuvent être mis en mouvement et entraînés par le fluide secondaire pour venir se bloquer à différents endroits du générateur de vapeur, tels que la plaque tubulaire 31, ou entre les tubes du faisceau tubulaire 3. Ces objets peuvent notamment endommager les parois des tubes par impact ou par frottement.

Le but de l'invention est de limiter la taille et le nombre des corps migrants, provenant du système d'alimentation d'eau secondaire, et de la partie supérieure du générateur de vapeur susceptible de parvenir à la plaque tubulaire et d'endommager le faisceau tubulaire.

D'autre part, le brevet américain US-A-3 916 844 décrit un dispositif séparateur pour un générateur de vapeur, dont l'arrivée de l'eau du circuit secondaire à l'intérieur de la cuve se fait autour de l'enveloppe comportant les tubes. Une chicane est imposée au flux d'eau au moyen d'une chute par gravité et d'une entrée latérale limitée dans un passage annulaire. Ainsi, on permet à certains déchets arrivant avec l'eau d'être stoppés avant que celle-ci soit envoyée par le passage annulaire vers les tubes pour être transformée en vapeur.

### OBJET DE L'INVENTION

A cet effet, l'objet principal de l'invention est un générateur de vapeur d'une installation nucléaire de production d'énergie électrique comprenant un dispositif de piégeage de corps migrants à l'intérieur du circuit secondaire, constitué d'un ensemble de grilles ou systèmes de filtrage mécanique équivalents occupant pour une efficacité optimum la totalité de la section annulaire du circuit secondaire, en aval des tubulures d'entrée de l'eau dans le circuit secondaire et en amont de l'entrée de l'eau dans le faisceau tubulaire du circuit primaire.

Lorsque les tubes du faisceau tubulaire sont espacés d'une distance déterminée, le dispositif selon l'invention est d'autant plus efficace que les grilles ont des mailles d'une largeur maximale inférieure à cette distance, afin de ne pas laisser passer des objets ou corps susceptibles de se coincer entre les tubes.

Dans la réalisation principale du dispositif selon l'invention, les grilles ou équivalents sont constituées de secteurs de couronnes montés sur deux goussets radiaux communs à deux secteurs adjacents et soudés sur l'enveloppe du faisceau.

Dans ce cas, les grilles sont de préférence vissées sur les goussets pour être démontables.

Dans la réalisation préférentielle du dispositif selon l'invention, la largeur des grilles est trés légèrement inférieure à la largeur de la section annulaire du circuit secondaire à l'endroit où les grilles sont posées pour laisser subsister un jeu de quelques millimètres, de manière à permettre des dilatations entre l'enveloppe de pression et l'enveloppe de faisceau du générateur de vapeur.

Dans ce cas, des premières lattes externes peuvent être placées sur la paroi interne de l'enveloppe de pression du générateur de vapeur dans la section annulaire pour combler le jeu circulaire externe entre les grilles et l'enveloppe de pression. Ces deuxièmes lattes circulaires fixées en périphérie externe des grilles permettent d'éviter le réentrainement dans l'espace entre l'enveloppe de pression et l'enveloppe de faisceau des objets piégés sur les grilles.

De même, des lattes internes peuvent être placées entre les grilles et la paroi externe de l'enveloppe de faisceau.

Pour permettre de résister aux impacts éventuels des corps migrants, aux différents efforts hydrauliques et aux poids d'éventuels intervenants, les grilles ont une épaisseur de quelques centimètres de manière à présenter une tenue mécanique suffisante.

### LISTE DES FIGURES

L'invention et ses différentes caractéristiques techniques seront mieux comprises à la lecture de la description suivante, accompagnée des figures décrivant respectivement :
- figure 1, déjà décrite, en coupe, un générateur de vapeur dans lequel est installé le dispositif selon l'invention ;
- figure 2, à une échelle plus grande, le dispositif selon l'invention installé dans le générateur de vapeur ;
- figures 3, 4 et 5, trois exemples de mailles des grilles du dispositif selon l'invention ; et
- figure 6, un exemple de fixation du dispositif selon l'invention dans un générateur de vapeur.

### DESCRIPTION DETAILLEE D'UN MODE DE REALISATION DE L'INVENTION

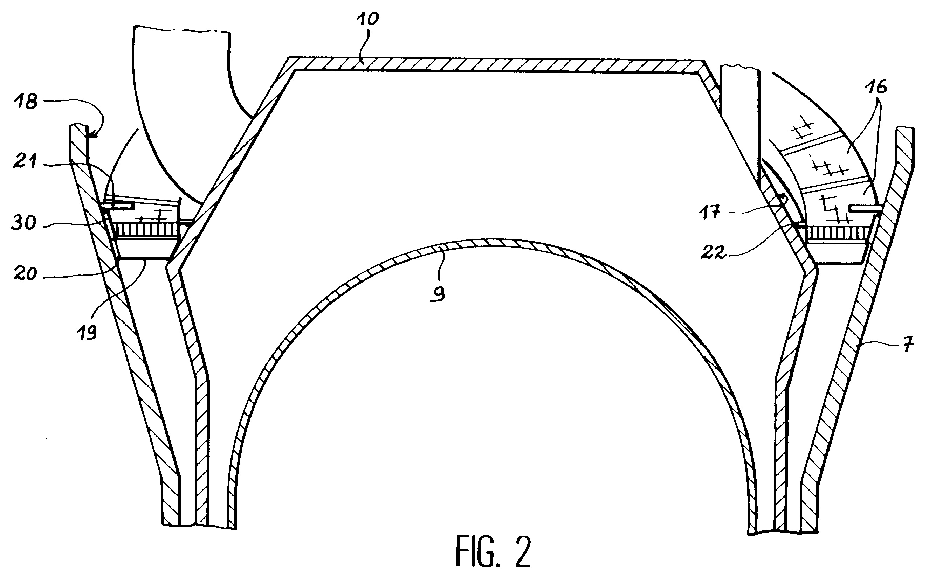

La figure 2 reprend la partie intermédiaire du générateur de vapeurde la figure 1. On y distingue donc la partie supérieure 10 de l'enveloppe de faisceau 8 entourant la partie supérieure 9 du faisceau tubulaire 3. On constate que, à ce niveau, l'enveloppe de pression 7 s'élargit, c'est-à-dire qu'elle présente une forme conique. Un espace, appelé retour d'eau, subsiste donc entre l'enveloppe de pression 7 et l'extérieur de l'enveloppé de faisceau 8. C'est dans cet espace que l'eau distribuée par l'anneau d'alimentation mélangée à l'eau recirculée est canalisée en partie inférieure du générateur de vapeur. C'est également à cet endroit que l'on peut choisir de placer le dispositif selon l'invention.

Sur cette figure 2, sont représentés principalement des secteurs de couronne de grilles 16 placés sur la surface extérieure 17 de la partie supérieure 10 de l'enveloppe de faisceau 8 et s'étendant en travers du retour d'eau 14 pour affleurer la surface interne 18 de l'enveloppe de pression 7. Ces grilles 16 ont été représentées horizontales, ceci n'étant qu'un mode de réalisation décrit. L'aspect fonctionnel de la position des grilles 16 est tel qu'elles doivent s'étendre sur pratiquement toute la section de ce retour d'eau 14 pour une efficacité optimale.

Ces grilles 16 sont de préférence positionnées dans ce retour d'eau 14 au moyen de goussets 19, eux-mêmes fixés de préférence sur la surface externe 17 de la partie supérieure 10 de l'enveloppe de faisceau 8.

Grâce à une largeur L des grilles 16 très légèrement inférieure à la largeur S du retour d'eau à cet endroit, on a laissé subsister un jeu 20 entre les grilles 16 et la surface interne 18 de l'enveloppe de pression 7. Ce jeu 20 a pour fonction de permettre d'éventuelles dilatations dues aux différences de température entre l'enveloppe de pression 7, l'enveloppe de faisceau 8, les grilles 16 et les goussets 19.

Sur cette figure 2, on peut distinguer également des lattes externes 21 fixées sur la périphérie externe des grilles 16. Ces lattes externes 21 ont pour but d'empêcher le réentrainement par l'eau secondaire des objets piégés sur les grilles 16, entre ces grilles 16 et l'enveloppe de pression 7.

Des lattes internes 22 sont placées horizontalement entre les grilles 16 et la surface externe 17 de la partie supérieure 10 de l'enveloppe de faisceau 8. Ainsi, le jeu subsistant entre ces grilles 16 et l'enveloppe de faisceau, qui peut être de forme conique, cylindrique ou autre, est comblé.

De même, des lattes externes 30 fixées sur la surface interne de l'enveloppe de pression 7 comblent le jeu existant entre les grilles 16 et l'enveloppe de pression 7.

En supposant que les tubes du faisceau tubulaire 3 (figure 1) sont espacés d'une distance déterminée D, les mailles des grilles 16 sont dimensionnées de manière à ne pas laisser passer des objets ou corps migrants susceptibles de se coincer entre deux tubes du faisceau tubulaire 3. En d'autres termes, les mailles des grilles 16 ne doivent pas laisser passer d'objets dont la dimension dépasse la distance déterminée D sépârant les tubes. A cet effet, on prévoit donc que la largeur maximale M des mailles des grilles 16 est inférieure à cette distance D.

Les grilles 16 ont été représentées avec une certaine épaisseur E, ou en d'autres termes, une certaine hauteur. Compte tenu que ces grilles 16 peuvent être élaborées en métal, elles peuvent ainsi avoir une résistance mécanique suffisante pour résister à différentes sollicitations, notamment des sollicitations verticales dirigées de haut en bas. En effet, les grilles 16 doivent tout d'abord résister aux efforts hydrauliques imposés par le mélange de l'eau issue de l'anneau d'alimentation et de l'eau recirculée descendant entre l'enveloppe de pression 7 et l'enveloppe de faisceau 8 et ce en fonctionnement normal et accidentel. De plus, lors du montage du générateur de vapeur, ces grilles 16 peuvent ainsi accueillir un ou plusieurs opérateurs, facilitant ainsi la mise en place de différents éléments du générateur de vapeur ainsi que les opérations de contrôle et de maintenance. Les grilles 16 constituent dans ce cas une sorte de chemin de ronde autour de la partie supérieure 10 de l'enveloppe de faisceau 8. D'autre part, les grilles 16 doivent pouvoir supporter sans dommage (rupture ou déformation) les impacts des corps migrants.

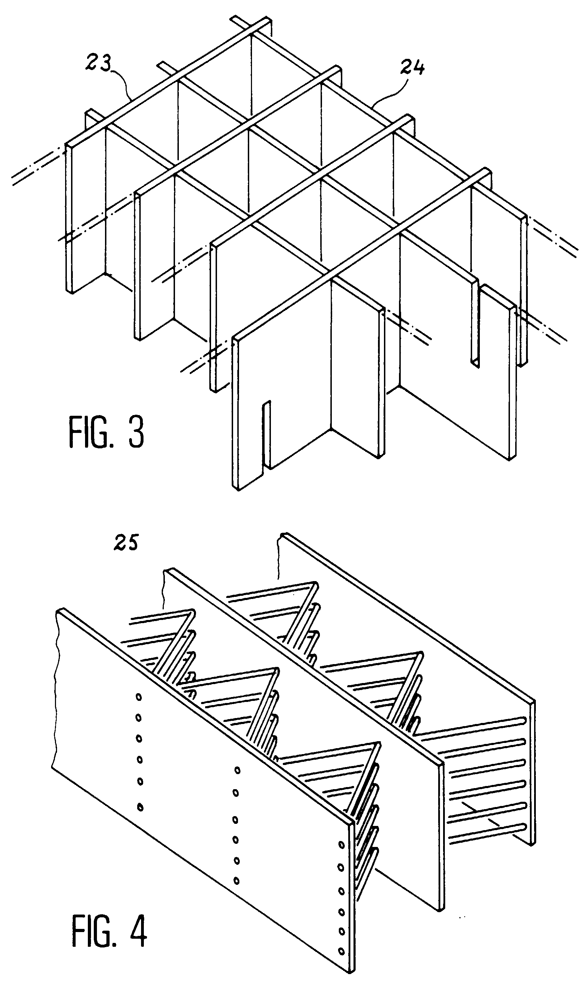

En se référant à la figure 3, une première forme de maille pour les grilles 16 est la forme carrée. Sans tenir compte de l'échelle à laquelle ces mailles sont représentées, on doit donc signaler que la diagonale du carré de chacune des mailles doit être inférieure à la distance D séparant les tubes du faisceau tubulaire. Ceci est un ordre de grandeur pour indiquer que la taille des mailles des grilles du dispositif selon l'invention doit être telle qu'elles ne doivent pas laisser passer des objets susceptibles de se coincer ou de s'arc-bouter entre les tubes de ce faisceau tubulaire.

Cette grille à mailles carrées peut être réalisée à l'aide d'une première série de tôles parallèles entre elles 23, pour délimiter chacune deux côtés opposés des mailles d'une même colonne ou ligne. Une deuxième série de tôle 24 perpendiculaire à celle 23 de la première série peut être encastrée dans cette dernière pour définir les deux autres côtés opposés des mailles correspondantes. L'encastrement peut être obtenu en pratiquant des fentes 29 sur la moitié de la hauteur dans chacune des tôles de chaque série à l'endroit du croisement des tôles 23 et 24.

La figure 4 représente des grilles avec des mailles de forme triangulaire. Il est ainsi possible de construire une grille épaisse composée d'une série de tôles ondulées ou pliées soudées de part et d'autre sur deux tôles planes. Le plus grand côté du triangle devra être inférieur à la distance D séparant les tubes du faisceau tubulaire.

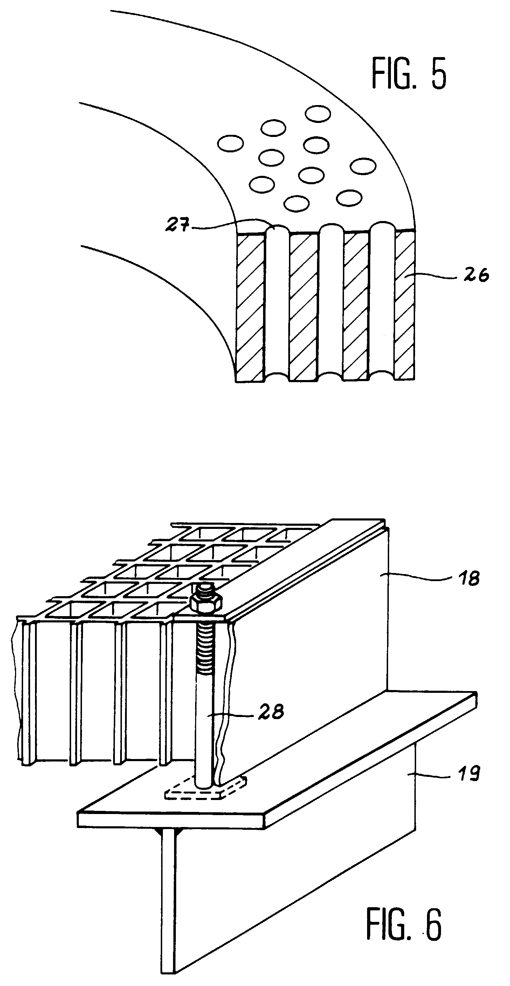

La figure 5 montre une troisième réalisation de grilles construites dans une plaque rigide 26 dans laquelle des trous 27 ont été percés, par exemple en quinconce. Le diamètre des trous 27 doit évidemment être inférieur à la distance D séparant les tubes du faisceau tubulaire.

Les modes de réalisation des mailles décrits sur les figures 3, 4 et 5 ne sont pas limitatifs quant à la réalisation et à la forme des mailles constituant les grilles 16.

La figure 6 représente en détail un mode de fixation des grilles 16 sur leurs goussets 19. Ces derniers ont été représentés par un profilé en forme de T. Ce type de gousset 19 s'étend radialement par rapport à l'enveloppe de faisceaux du générateur de vapeur. Ils peuvent être soudés sur cette dernière.

La fixation des grilles 16 sur ces goussets 19 peut se faire par vissage à l'aide, par exemple, de boulons 28, ce qui permet de pouvoir démonter ces grilles 16. Elles peuvent être également soudées sur les goussets 19. On peut ainsi sur chaque gousset 19 fixer deux grilles adjacentes 16 en laissant ou non un espace entre ces deux grilles adjacentes. La forme en T des goussets et en particulier la partie supérieure du T permet d'obturer d'éventuels jeux radiaux subsistant entre les grilles 16.

Les grilles 16 permettent donc de former une sorte de caillebotis de filtrage ou de piégeage de corps migrants en provenance des circuits internes supérieurs du générateur de vapeur, du système d'eau alimentaire du circuit secondaire, ou tout simplement en circulation dans le générateur de vapeur.

L'invention ne se limite pas aux modes de réalisation qui ont été décrits.

Tout système équivalant à une grille pouvant assurer la même fonction pourra être utilisé.

Le mode supportage peut être différent : soudage sur d'autres parties ou par d'autres moyens (vissage par exemple).

L'altitude du dispositif dans le générateur de vapeur peut être choisie à un niveau quelconque entre l'anneau d'alimentation d'eau secondaire et la plaque tubulaire.

### AVANTAGES DE L'INVENTION

La présence de ce caillebotis de grilles facilite le montage du générateur de vapeur et peut être réalisé en usine lors de la fabrication de ce dernier.

Ce caillebotis reste d'une grande facilité d'accès, de maintenance et d'inspection tout en préservant l'accessibilité à la surface secondaire de la plaque tubulaire 31 via le retour d'eau. Enfin, la présence de ces grilles n'a qu'un très faible impact sur les performances du générateur de vapeur, compte tenu des pertes de charge.

Le dispositif permet de piéger la totalité des corps migrants susceptibles d'endommager les parties internes du générateur de vapeur au-dessus de la plaque tubulaire 31, ceci pour les corps migrants provenant aussi bien de l'anneau d'alimentation que de la partie supérieure du générateur de vapeur.

## Revendications

1. Générateur de vapeur d'une installation nucléaire de production d'énergie électrique comprenant un dispositif de piégeage de corps migrants à l'intérieur du circuit secondaire constitué d'un ensemble de filtrage placé en travers de la section annulaire du circuit secondaire, en aval des tubulures d'entrée (4) de l'eau dans le circuit secondaire et en amont de l'entrée de l'eau dans le faisceau tubulaire (3) du circuit primaire, les tubes du faisceau tubulaire (3) étant espacés d'une distance déterminée (D), caractérisé en ce que l'ensemble de filtrage est constitué de grilles (16) ayant des mailles d'une largeur maximale (M) inférieure à la distance (D) séparant les tubes du faisceau tubulaire (3), afin de ne pas laisser passer des objets ou corps migrants susceptibles de se coincer entre les tubes.

2. Générateur selon la revendication 1, caractérisé en ce que les grilles (16) sont constituées de secteurs de couronne montés sur deux goussets radiaux (19) communs à deux secteurs adjacents et soudés sur une enveloppe du faisceau (8).

3. Générateur selon la revendication 2, caractérisé en ce que les grilles (16) sont vissées sur les goussets (19) de manière à pouvoir être démontables.

4. Générateur selon l'une quelconque des revendications 1 à 3, caractérisé en ce que la largeur (L) des grilles (16) est très légèrement inférieure à la largeur (S) de la section annulaire du circuit secondaire, à l'endroit où les grilles (16) sont posées pour laisser subsister un jeu (20) de quelques millimètres, de manière à permettre des dilatations entre une enveloppe de pression (7) et l'enveloppe de faisceau (8) du générateur de vapeur.

5. Générateur selon la revendication 4, caractérisé en ce qu'il comprend des premières lattes externes (21) placées en périphérie externe des grilles (16), afin d'éviter le réentraînement des corps migrants piégés sur les grilles (16) par l'eau secondaire dans le jeu circulaire externe (20) entre les grilles (16) et l'enveloppe de pression (7).

6. Générateur selon la revendication 4 ou 5, caractérisé en ce qu'il comprend des lattes internes (22) placées entre les grilles (16) et la surface externe (17) de l'enveloppe de faisceau (8).

7. Générateur selon la revendication 4, 5 ou 6, caractérisé en ce qu'il comprend des deuxièmes lattes externes (30) fixées sur la face interne (18) de l'enveloppe de pression (7) du générateur de vapeur dans la section annulaire (14) pour combler le jeu annulaire externe (20) entre les grilles (16) et l'enveloppe de pression (7).

8. Générateur selon l'une quelconque des revendications 1 à 7, caractérisé en ce que les grilles (16) ont une épaisseur (E) de quelques centimètres pour doter les grilles (16) d'une tenue mécanique suffisante, pour résister aux efforts tels que le poids d'éventuels intervenants, les efforts hydrauliques en fonctionnement normal ou accidentel et pour tenir aux impacts locaux des corps migrants sans déformation, ni rupture.

## Patentansprüche

1. Dampferzeuger einer Nuklearanlage zur Erzeugung von elektrischer Energie, umfassend ein Fremdpartikelfilter im Sekundärkreislauf, gebildet durch eine Filtriereinheit, angeordnet quer über dem ringförmigen Querschnitt des Sekundärkreislaufs, stromabwärts bzw. unterhalb von den Eintrittsrohrstutzen (4) des Wassers in den Sekundärkreislauf und oberhalb vom Eintritt des Wassers in das Rohrbündel (3) des Primärkreislaufs, wobei die Rohre des Rohrbündels (3) beabstandet sind durch einen bestimmten Abstand (D),
**dadurch gekennzeichnet,** daß die Filtriereinheit gebildet wird durch Gitter (16) mit Maschen einer maximalen Breite (M), die kleiner ist als der die Rohre des Rohrbündels (3) trennende Abstand (D), um keine Gegenstände oder Fremdkörper durchzulassen, die sich zwischen den Rohren festsetzen könnten.

2. Dampferzeuger nach Anspruch 1, dadurch gekennzeichnet, daß die Gitter (16) gebildet werden durch Ringsegmente, angebracht auf zwei radialen, zwei aneinanderstoßenden Segmenten gemeinsamen Auflagestücken (19), festgeschweißt an einer Rohrbündelhülle (8).

3. Dampferzeuger nach Anspruch 2, dadurch gekennzeichnet, daß die Gitter (16) festgeschraubt sind auf den Auflagestücken (19), so daß sie demontierbar sind.

4. Dampferzeuger nach einem der Ansprüche 1 bis 3, dadurch gekennzeichnet, daß die Breite (L) der Gitter (16) ganz geringfügig kleiner ist als die Breite (S) des ringförmigen Querschnitts des Sekundärkreislaufs an der Stelle, wo die Gitter (16) aufliegen, so daß ein Spiel (20) von einigen Millimetern vorhanden ist, um die Wärmedehnungen zwischen einem Druckmantel (7) und der Rohrbündelhülle (8) des Dampferzeugers zu ermöglichen.

5. Dampferzeuger nach Anspruch 4, dadurch gekennzeichnet, daß er erste Außenleisten (21) umfaßt, angebracht am Außenrand der Gitter (16), um zu vermeiden, daß durch die Gitter (16) zurückgehaltene Fremdkörper durch das Sekundärwasser wieder mitgenommen werden in das ringförmige äußere Spiel (20) zwischen den Gittern (16) und dem Druckmantel (7).

6. Dampferzeuger nach Anspruch 4 oder 5, dadurch gekennzeichnet, daß er Innenleisten (22) umfaßt, angebracht zwischen den Gittern (16) und der Außenfläche (17) der Rohrbündelhülle (8).

7. Dampferzeuger nach einem der Ansprüche 4, 5 oder 6, dadurch gekennzeichnet, daß er zweite Außenleisten (30) umfaßt, befestigt auf der Innenseite (18) des Druckmantels (7) des Dampferzeugers in dem ringförmigen Querschnitt (14), um das ringförmige äußere Spiel (20) zwischen den Gittern (16) und dem Druckmantel (7) auszufüllen.

8. Dampferzeuger nach einem der Ansprüche 1 bis 7, dadurch gekennzeichnet, daß die Gitter (16) eine Dicke (E) von einigen Zentimetern haben, um den Gittern (16) eine ausreichende mechanische Festigkeit zu verleihen für Beanspruchungen wie etwa das Gewicht eines eventuellen Intervenienten oder die hydraulischen Belastungen im normalen oder störfallbedingten Betrieb und um den örtlichen Stößen beim Aufprallen von Fremdkörpern ohne Deformierung oder Bruch standzuhalten.

## Claims

1. Steam generator of a nuclear electric power production plant incorporating a device for trapping migrating bodies within the secondary circuit, constituted by a filtering system positioned across the annular cross-section of the secondary circuit, downstream of the intake tubes (4) for the water into the secondary circuit and upstream of the entry of the water into the nest of tubes (3) of the primary circuit, the tubes of the tube nest (3) being spaced by a given distance (D), characterized in that the filtering system is constituted by grids (16) having meshes with a maximum width (M) smaller than the distance (D) separating the tubes of the tube nest (3), so as to only allow the passage of migrating bodies or objects liable to jam between the tubes.

2. Generator according to claim 1, characterized in that the grids (16) are constituted by circular sectors mounted on two radial brackets (19) common to two adjacent sectors and welded to the tube nest envelope (8).

3. Generator according to claim 2, characterized in that the grids (16) are screwed to the brackets (19) so as to be dismantlable.

4. Generator according to any one of the claims 1 to 3, characterized in that the width (L) of the grids (16) is very slightly less than the width (S) of the annular cross-section of the secondary circuit, at the point where the grids (16) are positioned in order to leave a clearance (20) of a few millimetres, so as to allow expansions between a pressure envelope (7) and the tube nest envelope (8) of the steam generator.

5. Generator according to claim 4, characterized in that it comprises first outer strips (21) placed on the outer periphery of the grids (16), in order to prevent the reintroduction by the secondary water of migrating bodies trapped on the grids (16) into the outer circular clearance (20) between the grids (16) and the pressure envelope (7).

6. Generator according to claim 4 or 5, characterized in that it comprises inner strips (22) placed between the grids (16) and the outer surface (17) of the tube nest envelope (8).

7. Generator according to claim 4, 5 or 6, characterized in that it comprises second outer strips (30) fixed to the inner face (18) of the pressure envelope (7) of the steam generator in the annular section (14) in order to fill the outer annular clearance (20) between the grids (16) and the pressure envelope (7).

8. Generator according to any one of the claims 1 to 7, characterized in that the grids (16) have a thickness (E) of a few centimetres in order to give the said grids (16) an adequate mechanical strength for resisting the stresses such as the weight of operators, hydraulic stresses in both normal and accidental operation and to withstand the local impacts of migrating bodies without deformation or fracture.
